# DEMANDE DE BREVET EUROPEEN

(11) **EP 0 555 126 A1**
(43) Date de publication de la demande: **11.08.1993**
(21) Numéro de dépôt: 93400218.9
(22) Date de dépôt: 28.01.1993
(51) Int. Cl.: B32B 15/01, C22C 38/24

(54) **Cylindre de travail composite pour laminage à froid de produits plats et ses applications**

(30) Priorité: 04.02.1992 FR 9201232
(71) Demandeur: FORCAST INTERNATIONAL, F-92800 Puteaux (FR)
(72) Inventeur: Werquin, Jean-Claude, F-59790 Ronchin (FR); Bocquet, Jacques, F-59600 Maubeuge (FR)
(74) Mandataire: Moncheny, Michel

(57) **Abrégé**

La présente invention est relative à un cylindre de travail composite pour cages tandem ou skin pass d'un train à bandes à froid, dont la zone externe de travail est réalisée en un acier au chrome-vanadium, caractérisé en ce que l'acier au chrome-vanadium de la couche externe de travail contient de 1,3 à 2,2 en poids en carbone, de 8 à 16% en poids de chrome, de 5 à 7% de poids en vanadium, le reste étant constitué de fer et d'éléments habituellement présents.

## Description

La présente invention concerne les cylindres de travail composites utilisés pour le laminage à froid de produits métalliques plats.

On a utilisé dans ce type d'application, successivement, des cylindres en acier forgé, puis des cylindres composites bimétalliques constitués d'une couche externe en fonte à haute teneur en chrome et d'un coeur en fonte lamellaire ou nodulaire. On connaît également d'après le brevet FR-80 23 316 des cylindres composites bimétalliques, dont l'enveloppe est réalisée en un acier ayant une teneur en chrome comprise entre 8 et 16% et une teneur en carbone comprise entre 0,65 et 0,95%, le rapport chrome/car- bone étant compris entre 11 et 16 et la structure du métal d'enveloppe étant martensitique avec une teneur en austénite résiduelle inférieure à 10%.

Ces derniers cylindres se sont révélés excellents, notamment en ce qui concerne leur tenue, leur résistance à l'adoucissement à chaud, ainsi que leur tenue au grenaillage ou au texturage. Cependant ces qualités particulièrement intéressantes offrent certaines limites lorsque les cylindres sont installés dans les premières cages tandem d'un train de laminage à froid, ou bien dans des cages dites de skin pass.

Une explication peut être trouvée dans le fait que dans les dernières cages d'un train de laminage à froid, la composante hydrodynamique est prépondérante dans la coopération entre les cylindres et le produit laminé, tandis que dans les premières cages ou bien dans des cages de skin pass, c'est la composante grippage ou en d'autres termes le contact métal sur métal qui devient prépondérant par rapport à la composante hydrodynamique. Il en résulte une usure qui affecte l'état de surface du cylindre dont la durée de montage est alors réduite.

Par ailleurs dans les premières cages tandem de réduction d'un train à bandes à froid, lorsqu'on utilise des cylindres de travail en acierforgé, on est contraint de procéder à intervalles réguliers à un chromage superficiel du cylindre, ce qui représente une perte de temps et de rendement et un coût supplémentaire.

Le but de l'invention est par conséquent de proposer des cylindres de travail pour le laminage à froid de produits métalliques plats, qui présentent des qualités améliorées, notamment quant au maintien de la rugosité ou de la texture superficielle, le maintien de cette rugosité ou de cette texture superficielle devant s'accompagner d'une résistance à l'usure importante du cylindre.

A cet effet l'invention a pour objet un cylindre de travail composite pour le laminage à froid de produits métalliques plats, comprenant un coeur en fonte ou en acier, une zone externe en acier au chromevana- dium et une zone de liaison entre le coeur et et la zone externe, caractérisé en ce que l'acier de la zone externe contient 1,3 à 2,2% en poids de carbone, 8 à 16% en poids de chrome et 4 à 7% en poids de vanadium, le reste étant constitué par du fer et d'autres éléments habituellement présents.

Suivant d'autres caractéristiques :
- les teneurs en chrome et en vanadium sont de préférence comprises entre 9 et 14% et entre 5 et 6,5%, respectivement;
- l'acier de la zone externe de travail contient en outre 2 à 6% de tungstène;
- le coeur du cylindre est en fonte nodulaire;
- le coeur du cylindre est en acier contenant 0,3 à 0,5% en poids de carbone.

L'invention a également pour objet l'utilisation dans l'une. des premières cages de réduction ou dans une cage de skin-pass d'un laminoir à froid, d'un cylindre tel que défini précédemment.

L'invention va être décrite plus en détail ci-dessous en se référant au dessin annexé, donné uniquement à titre d'exemple et sur lequel :
La Fig. 1 représente schématiquement une coupe micrographique illustrant la structure de la zone externe de travail d'un cylindre suivant l'invention; et

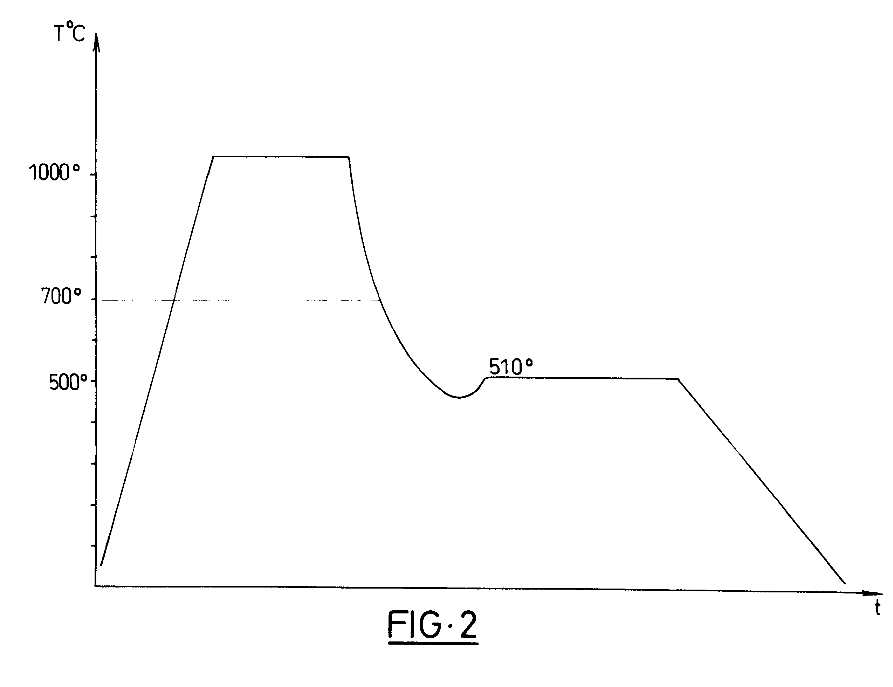

La Fig. 2 est un schéma illustrant un traitement thermique pouvant être appliqué à un tel cylindre.

Les expériences conduites à partir de l'état de la technique analysé ci-dessus ont conduit aux raisonnements suivants :
De façon à conserver la morphologie des carbures de chrome déjà obtenue par le brevet FR-79 27 952, la teneur en carbures M ₇ C ₃ doit être comprise entre 3 et 15%, ce qui conduit à une teneur en carbone comprise entre 1,3 et 2,2% et une teneur en chrome comprise entre 8 et 16%. La teneur en chrome de la matrice est alors comprise entre 6 et 13%.

Par ailleurs le brevet FR-87 18 073 met en évidence une limite technologique de l'utilisation de l'élément d'alliage vanadium, lors de l'utilisation de la coulée centrifuge qui reste la mieux adaptée et la plus économique pour la fabrication de cylindres bimétalliques.

Cette ligne dite ligne de"vanadium critique" définit, pour une teneur en carbone donnée une teneur en vanadium à ne pas dépasser sous peine de provoquer immédiatement une zone de décantation du carbure VC conduisant automatiquement à une zone de liaison tout à la fois poreuse et fragile entre le coeur du cylindre et son enveloppe.

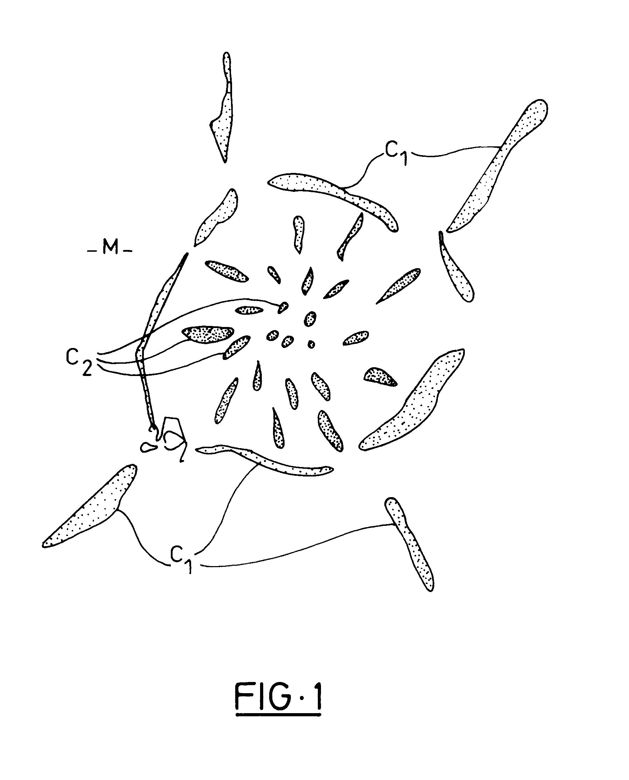

D'un autre côté le carbure VC de l'eutectique VC qui se forme bien avant l'eutectique M ₇ C ₃ se retrouve en final sous la forme d'éléments allongés ou "d'aiguilles" disposés en position intragranulaire par rapport à l'eutectique M ₇ C ₃, procurant ainsi entre les carbures M ₇ C ₃ une structure en forme "d'oursin". Cette disposition est illustrée schématiquement sur la Fig. 1. Sur cette figure on a représenté, noyés dans la matrice M de l'acier constituant la zone externe du cylindre, des carbures Ci de type M ₇ C ₃ et des carbures C ₂ de type VC. La variation de forme des carbures VC telle qu'elle apparaît sur ce schéma correspond à la structure en "oursin" mentionnée précédemment.

La teneur en vanadium du cylindre de l'invention est comprise entre 5 et 7% et variable suivant la teneur en carbone, cette teneur en vanadium étant d'autant plus faible que la teneur en carbone est plus élevée. Une telle teneur en vanadium permet l'utilisation d'un procédé de fabrication pour coulée centrifuge.

Dans ces conditions les teneurs en carbure VC, mesurées au microscope électronique à balayage sont comprises entre 4 et 5% en volume.

Cet eutectique VC s'est révélé en service d'une résistance à l'usure extrême sans doute tout à la fois en raison de la dureté du carbure VC (3000 HV) et de ses propriétés tribologiques se manifestant par la formation instantanée d'oxyde de vanadium.

Lors de la cristallisation il se forme exclusivement deux eutectiques, celui du chrome et celui du vanadium, mais aucun carbure M ₃ C que l'on cherche de toute façon à éviter.

L'utilisation des autres éléments habituels tels que Co, Nb, Ti, Zr, B, Mo en quantités variables est possible mais ne change pas fondamentalement les propriétés recherchées et obtenues par l'invention.

En revanche l'élément W compris entre 2 et 6% est l'élément le plus actif pour obtenir des duretés très élevées supérieures à 800 HV, quelquefois nécessaires pour le laminage à froid en skin-pass. Il apparaît alors un troisième eutectique situé entre celui du vanadium et celui du chrome lorsque le tungstène dépasse 2%.

En tout état de cause la teneur globale en ces divers éléments d'alliage ne doit pas dépasser 10%.

De façon plus spécifique, lorsque des cylindres selon l'invention sont utilisés dans les premières cages de réduction d'un train de laminage à froid, ils présentent une résistance à l'usure tout-à-fait remarquable et très supérieure à celle des cylindres classiques en acier, forgés et chromés.

En effet les carbures de vanadium disposés selon la structure en "oursin" entre les carbures de chrome de type M ₇ C ₃ apportent une amélioration considérable grâce à leur dureté extrême et à leur excellent comportement tribologique. Ceci se traduit par une augmentation très sensible de la durée de montage de ces cylindres.

Dans des cages de skin-pass, les cylindres modernes subissent un traitement de surface visant à leur conférer une texture particulière. Cette opération est réalisée parrefusion de la couche superficielle, au moyen d'un faisceau laser (procédé LBT), par électroérosion (procédé EDT) ou par bombardement par un faisceau d'électrons (procédé EBT).

Les cylindres selon l'invention se prêtent particulièrement bien à ce type de traitement et conservent de façon beaucoup plus durable et sans usure notable l'état de surface qui leur est conféré.

Cette amélioration résulte, comme précédemment, de la présence de carbures de vanadium dont la dureté est trois fois supérieure à celle d'une couche de chrome déposée par voie électrolytique, et qui se reforment instantanément après refusion, en raison de leur caractère primaire. Ces carbures demeurent présents à la surface du cylindre pour lui conserver ses caractéristiques de rugosité. De plus, les propriétés tribologiques bien connues du carbure de vanadium ont pour effet d'assurer dans les meilleures conditions le transfert de rugosité du cylindre à la tôle.

Un autre avantage, dans cette application, réside dans la diminution sinon la quasi suppression des poussières qui se produisent lorsqu'on utilise des cylindres classiques. Or ces poussières sont transférées sur les cylindres d'appui, puis sur les cylindres de travail et sur la bande ce qui a pour effet d'affecter la qualité de cette dernière.

A titre d'exemple, des cylindres selon l'invention ayant les compositions moyennes suivantes ont été essayés avec succès dans les deux applications envisagées ci-dessus :
C : 1,72
Si 0,85
Mn 0,78
P 0,030
S 0,014
Ni 0,79
Cr 9,25
Mo : 1,82
V 6,3
W 0,62

Afin d'améliorer la dureté de ces cylindres, on peut par ailleurs prévoir une teneur en tungstène plus élevée, comprise entre 2 et 6%.

Le coeur du cylindre peut être soit en fonte nodulaire soit en acier contenant par exemple 0,3 à 0,5% en poids de carbone. On utilise de préférence un coeur en acier lorsque la température d'austénitisation est elevée.

La dureté des cylindres selon l'invention est de l'ordre de 90 à 100 shC.

Ces cylindres sont fabriqués par centrifugation verticale, cette phase de la fabrication étant suivie d'un traitement thermique comprenant les phases suivantes :
- tout d'abord une austénitisation conduite entre 1 000 et 1 050°C si le coeur du cylindre est en fonte nodulaire et entre 1 100 et 1 200°C si ce coeur est en acier. La durée et la température de ce traitement d'austénitisation dépendent, de façon connue, du diamètre du cylindre;
- refroidissement rapide à l'eau pulvérisée, jusqu'à une température de 700°C environ, puis refroidissement plus lent à l'air avec le cas échéant pulvérisation intermittente d'eau, jusqu'à une température de l'ordre de 450°C;
- le cylindre est ensuite maintenu à une température constante de l'ordre de 510° C environ, pendant une durée comprise entre 6 et 24 heures, suivant la dimension du cylindre;
- on effectue ensuite un refroidissement dans le four, jusqu'à la température ambiante.

Selon la teneuren austénite résiduelle, le cylindre subit ensuite de façon connue deux ou trois revenus à une température comprise entre 450 et 550°C.

## Revendications

1. Cylindre de travail composite pour le laminage à froid de produits métalliques plats, comprenant un coeur en fonte ou en acier, une zone externe en acier au chrome-vanadium et une zone de liaison entre le coeur et la zone externe, caractérisé en ce que l'acier de la zone externe contient 1,3 à 2,2% en poids de carbone, 8 à 16% en poids de chrome et 4 à 7% en poids de vanadium, le reste étant constitué par du fer et d'autres éléments habituellement présents.

2. Cylindre suivant la revendication 1, caractérisé en ce que l'acier de la zone externe contient 9 à 14% de chrome et 5 à 6,5% de vanadium.

3. Cylindre suivant la revendication 1, caractérisé en ce que l'acier de la zone externe contient 2 à 6% en poids de tungstène.

4. Cylindre suivant l'une quelconque des revendications 1 à 3, caractérisé en ce que l'acier de la zone externe contient des éléments d'alliage choisis dans le groupe comprenant Co, Nb, Ti, Zr, B, Mo, et dont la teneur globale est inférieure ou égale à 10% en poids.

5. Cylindre suivant l'une quelconque des revendications 1 à 4, caractérisé en ce que la teneur en vanadium est d'autant plus faible que la teneur en carbone est élevée.

6. Cylindre suivant la revendication 5, caractérisé en ce que dans un diagramme C, V les points représentatifs de la teneur en ces deux éléments se situent sur ou au voisinage d'un segment de droite déterminé par les points C = 1,3, V = 7 et C = 2,2 V = 5.

7. Cylindre suivant l'une quelconque des revendications 1 à 6, caractérisé en ce que le coeur du cylindre est en fonte nodulaire.

8. Cylindre suivant l'une quelconque des revendications 1 à 6, caractérisé en ce que le coeur du cylindre est en acier contenant 0,3 à 0,5% en poids de carbone.

9. Cylindre suivant l'une quelconque des revendications 1 à 8, caractérisé en ce qu'il est fabriqué par coulée centrifuge.

10. Utilisation d'un cylindre suivant l'une quelconque des revendications précédentes dans une des premières cages de réduction ou dans une cage de skin-pass d'un train de laminage à froid.
